# EUROPÄISCHE PATENTSCHRIFT

(11) **EP 2 942 253 B1**
(45) Veröffentlichungstag und Bekanntmachung des Hinweises auf die Patenterteilung: **07.07.2021**
(21) Anmeldenummer: 15001314.2
(22) Anmeldetag: 04.05.2015
(51) Int. Cl.: B60W 40/06

(54) **KRAFTFAHRZEUG**
MOTOR VEHICLE
VÉHICULE AUTOMOBILE

(30) Priorität: 06.05.2014 DE 102014006546
(43) Veröffentlichungstag der Anmeldung: 11.11.2015
(73) Patentinhaber: AUDI AG, 85045 Ingolstadt (DE)
(72) Erfinder: Schuder, Claudia, 85049 Ingolstadt (DE); Popken, Markus, 85080 Gaimersheim (DE)
(74) Vertreter: Thielmann, Frank

(56) Entgegenhaltungen:
- DE-A1-102005 037 273
- DE-A1-102011 014 699
- DE-A1-102013 109 070
- None

## Beschreibung

Die Erfindung betrifft ein Kraftfahrzeug, umfassend ein Fahrerassistenzsystem zur Ermittlung von im Fahrzeugumfeld befindlichen Bordsteinen und zur Ausgabe einer Warnung oder zur Durchführung eines Längs- oder Querführungseingriffs, wobei das Fahrerassistenzsystem wenigstens eine Kamera zur Aufnahme von Bildern des Fahrzeugumfelds und eine Steuerungseinrichtung zur Auswertung der Bilder zur Ermittlung eines etwaigen im Bild gezeigten Bordsteins aufweist.

Ein Kraftfahrzeug der eingangs genannten Art ist beispielsweise aus DE 10 2011 014 699 A1 bekannt. Das Fahrerassistenzsystem dient der Ermittlung des Vorhandenseins eines etwaigen Bordsteins in der unmittelbaren Umgebung des Kraftfahrzeugs, wozu bei dem bekannten Stand der Technik eine Weitwinkel-Kamera verwendet wird. Zur Detektion des Objekts werden aus zwei von unterschiedlichen Positionen des Kraftfahrzeugs aufgenommenen Bildern mittels eines Motion-Stereo-Verfahrens die dreidimensionalen Positionsdaten des in den Bildern sichtbaren Objekts unter Berücksichtigung der Aufnahmeorte ermittelt. Das erfasste Objekt wird anhand seiner Positionsdaten in ein dreidimensionales, insbesondere als Belegungskarte ausgebildetes Umfeldmodell eingetragen. Basierend hierauf kann ein Gefährdungswert ermittelt werden, also ein Kritikalitätswert, der angibt, wie groß die Gefahr einer Kollision mit dem Randstein ist, woraufhin der Fahrer gewarnt werden kann respektive ein Fahreingriff, insbesondere eine Bremsung, vorgenommen werden kann.

Das aus dem Stand der Technik bekannte Fahrerassistenzsystem gibt folglich immer dann eine Warnung aus respektive nimmt einen aktiven Fahreingriff vor, sobald ein Hindernis erkannt wird, das hinsichtlich seines Abstandes zum Kraftfahrzeugrad sowie insbesondere hinsichtlich seiner Höhe dem geforderten Kritikalitätskriterium entspricht. Jedoch sind nicht alle Hindernisse respektive Bordsteine, die die entsprechende Höhe aufweisen, in gleicher Weise eine Gefahrenquelle, mithin also im gleichen Umfang kritisch in Bezug auf eine etwaige Kollision des Rades respektive Reifens mit dem Bordstein.

DE 10 2005 037 273 A1 offenbart ein Spurhaltesystem, bei welchem Fahrbahnbegrenzungselemente mit Hilfe einer Kamera erkannt werden und in Gattungen, z.B. aufgemalte Fahrbahnmarkierung, Bordstein, Beton-Trennwand, Baken, Bankett, etc. klassifiziert werden. Anhand der Klassifikation wird ein Gefährdungspotential des Fahrbahnbegrenzungselements beurteilt. In Abhängigkeit des beurteilten Gefährdungspotentials werden Gegenmaßnahmen eingeleitet.

Der Erfindung liegt damit das Problem zugrunde, ein Kraftfahrzeug anzugeben, das demgegenüber verbessert ist.

Zur Lösung dieses Problems ist bei einem Kraftfahrzeug der eingangs genannten Art erfindungsgemäß vorgesehen, dass der Steuerungseinrichtung ein Speicher mit darin hinterlegten, unterschiedliche Bordsteintypen zeigenden Vergleichsbildern zugeordnet ist, wobei die Steuerungseinrichtung zum Klassifizieren eines in einem Bild ermittelten Bordsteins durch Vergleich des Bildes mit einem Vergleichsbild und zur Ausgabe der Warnung oder zur Durchführung des Eingriffs in Abhängigkeit des Klassifikationsergebnisses ausgebildet ist.

Das erfindungsgemäße Kraftfahrzeug respektive Fahrerassistenzsystem ist dazu ausgelegt, einen erfassten Bordstein hinsichtlich seines Typs zu klassifizieren. Es erfolgt also keine ausschließliche Beurteilung der Höhe des Bordsteins, um gestützt hierauf die Kritikalität zu bestimmen, sondern es wird ermittelt, um welchen Bordsteintyp es sich handelt, da gerade davon in besonderem Maß die Kritikalität des Bordsteins im Hinblick auf eine etwaige Kollision mit dem Kraftfahrzeugrad abhängt. Dem liegt die Erkenntnis zugrunde, dass im Straßenbau viele verschiedene Varianten respektive Typen von Bordsteinen verwendet werden, die unterschiedlich kritisch zu beurteilen sind. So bietet beispielsweise ein im Querschnitt im Wesentlichen rechteckiger Granitbordstein mit scharfer Kante ein größeres Schadenspotential als ein üblicherweise als gegossenes Betonbauteil ausgeführter Rund- oder Flachbordstein. Das heißt, dass ein entsprechender Granitbordstein mit rechteckigem Querschnitt und scharfer Kante wesentlich kritischer zu beurteilen ist, als ein entsprechender Rund- oder Flachbordstein, selbst wenn beide gleich hoch sind. Beim erfindungsgemäßen Kraftfahrzeug ist nun seitens der Steuerungseinrichtung ein entsprechender Speicher vorgesehen, in dem Vergleichsbilder hinterlegt sind, die unterschiedliche Bordsteintypen zeigen. Diese Vergleichsbilder sind als standardisierte Bilder vorab erzeugt und remanent hinterlegt worden. Sie sind aus einer Perspektive aufgenommen worden, aus der auch mittels der fahrzeugseitig verbauten Kamera die entsprechenden Kamerabilder aufgenommen werden, so dass folglich der etwaige Bordstein im Kamerabild wie auch im Vergleichsbild aus nahezu der gleichen Perspektive dargestellt ist.

Die Steuerungseinrichtung ist nun in der Lage, durch entsprechende Bildanalysemittel im aufgenommenen Kamerabild einen etwaigen vorhandenen Bordstein zu ermitteln. Wird ein solcher ermittelt, so nimmt die Steuerungseinrichtung einen entsprechenden Vergleich des Kamerabildes mit den Vergleichsbildern vor, um den Bordsteintyp zu ermitteln. Es wird also ein "template matching" vorgenommen. Im Rahmen dieses "template matching" respektive Bildvergleichs analysiert nun die Steuerungseinrichtung, um welchen Bordsteintyp es sich handelt. Dies ist ohne weiteres möglich, als sich die entsprechenden unterschiedlichen Bordsteintypen doch deutlich im Bild unterscheiden. So weisen beispielsweise Granitbordsteine eine deutlich andere Struktur respektive Geometrie im aufgenommenen Bild auf, als entsprechende Betonbordsteine.

Ist der Bordsteintyp eindeutig erkannt, mithin also klassifiziert, so kann gestützt auf diese genaue Typenkenntnis entschieden werden, ob der Bordstein kritisch ist, oder nicht. In diese endgültige Entscheidung geht sodann beispielsweise auch eine Information über die tatsächliche Bordsteinhöhe ein, eine Information über die Relativposition des Kraftfahrzeugrads zum Bordstein und gegebenenfalls auch eine Information über die Höhe des Reifenquerschnitts, also dahingehend, ob es sich um einen Niedrigquerschnittsreifen oder einen vom Querschnitt her normalen Reifen handelt etc.

Insgesamt kann folglich aufgrund der erfindungsgemäß vorgenommenen Bordsteintypenklassifizierung eine deutlich differenziertere Entscheidung dahingehend, ob eine Warnung oder ein Eingriff von Nöten ist oder nicht, vorgenommen werden.

Zweckmäßigerweise ist die Steuerungseinrichtung zur Auswahl eines den Bordstein zeigenden Bildbereichs innerhalb des Bildes und zum Vergleich des Bildbereich mit dem Vergleichsbild ausgebildet. Das heißt, dass nach Erfassen eines Bordsteins im aufgenommenen Kamerabild seitens der Steuerungseinrichtung lediglich der relevante Bildausschnitt herangezogen und mit dem hinterlegten Vergleichsbild, also dem Template, verglichen wird.

Im Rahmen der Bordsteinerkennung bzw. des Vergleichs können seitens der Steuerungseinrichtung unterschiedliche Vergleichs- respektive Analyseverfahren verwendet werden. So kann im Rahmen der Erkennung bzw. des Vergleichs im Bild respektive Bildbereich und im Vergleichsbild der jeweilige Bordstein anhand einer kantenbasierten Bildauswertung und/oder einer texturbasierten Auswertung ermittelt und das jeweilige Auswertungsergebnis verglichen werden. Wie beschrieben unterscheiden sich die verschiedenen Bordsteintypen in ihrer Geometrie, also ihrem entsprechenden Umriss, wie auch in der Regel in der Textur, also der Oberflächenbeschaffenheit. Über entsprechende Analysealgorithmen ist es nun ohne weiteres möglich, im jeweiligen Bild respektive Vergleichsbild exakt den entsprechenden Bordstein zu erkennen und hierauf gestützt den Vergleich durchzuführen, um den konkreten Typ zu ermitteln.

Wie bereits beschrieben ist es zweckmäßig, wenn seitens der Steuerungseinrichtung im Bild selbst oder im Rahmen des Vergleichs die Höhe des im Bild gezeigten Bordsteins ermittelt wird, wobei zur Ausgabe der Warnung oder der Durchführung des Eingriffs neben dem Bordsteintyp auch die Ist-Höhe des erkannten Bordsteins berücksichtigt wird. Auch kann, wie bereits beschrieben, der Querschnitt des Kraftfahrzeugreifens berücksichtigt werden, um zu entscheiden, ob eine Warnung oder ein Eingriff erforderlich ist. Die Informationen zum Fahrzeugreifen sind zweckmäßigerweise im Speicher hinterlegt respektive können seitens der Steuerungseinrichtung entsprechend eingelesen werden.

Neben dem Kraftfahrzeug selbst betrifft die Erfindung ferner ein Verfahren zur Ermittlung von im Fahrzeugumfeld befindlichen Bordsteinen und zur Ausgabe einer Warnung oder zur Durchführung eines Längs- oder Querführungseingriffs mittels eines Fahrerassistenzsystems, wobei das Fahrerassistenzsystem wenigstens eine Kamera zur Aufnahme von Bildern des Fahrzeugumfelds und eine Steuerungseinrichtung zur Auswertung der Bilder zur Ermittlung eines etwaigen im Bild gezeigten Bordsteins aufweist. Das erfindungsgemäße Verfahren zeichnet sich dadurch aus, dass die Steuerungseinrichtung einen in einem Bild ermittelten Bordstein durch Vergleich des Bildes mit Vergleichsbildern, die unterschiedliche Bordsteintypen zeigen, klassifiziert und in Abhängigkeit des Klassifikationsergebnisses die Warnung ausgibt oder den Eingriff durchführt, wobei die Vergleichsbilder in einem der Steuerungseinrichtung zugeordneten Speicher hinterlegt sind. Verfahrensgemäß analysiert also die Steuerungseinrichtung zunächst das oder die aufgenommenen Kamerabilder und ermittelt einen etwaigen Bordstein, woraufhin das zugrunde liegende Bild mit den im Speicher hinterlegten Vergleichsbildern verglichen wird, um den konkreten Bordsteintyp zu ermitteln.

Weitere erfindungsgemäße Ausgestaltungen des Verfahrens sind den abhängigen Unteransprüchen zu entnehmen.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipdarstellung eines erfindungsgemäßen Kraftfahrzeugs, und
- Fig. 2: eine Prinzipdarstellung zur Erläuterung der Klassifizierung des Bildvergleichs.

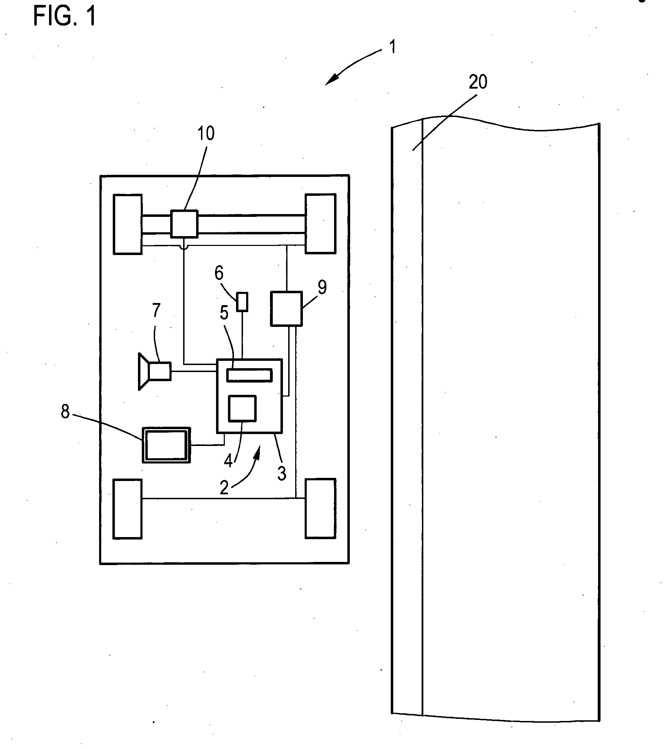

Fig. 1 zeigt ein erfindungsgemäßes Kraftfahrzeug 1, umfassend ein Fahrerassistenzsystem 2 zur Ermittlung eines im Fahrzeugumfeld befindlichen Bordsteins 20 sowie zur Ausgabe einer Warnung oder zur Durchführung eines Längs- oder Querführungseingriffs. Das Fahrerassistenzsystem 2 umfasst eine Steuerungseinrichtung 3 mit einem entsprechenden Speicher 4 und einer Rechen- und Auswerteeinheit 5, sowie eine mit der Steuerungseinrichtung 2 kommunizierende Kamera 6, wobei selbstverständlich auch mehrere Kameras, die zu unterschiedlichen Richtungen ausgerichtet sind und folglich das Fahrzeugumfeld aus verschiedenen Perspektiven aufnehmen, vorgesehen sein können. Die in Fig. 1 gezeigte Kamera 6 erfasst das Fahrzeugvorfeld mit, so dass zweckmäßigerweise auch eine weitere Kamera, die das rückwärtige Fahrzeugumfeld erfasst, um eine Bordsteinerfassung auch beim Rückwärtsfahren zu ermöglichen, vorgesehen sein kann.

Das Fahrerassistenzsystem 2 respektive die Steuerungseinrichtung 3 über ihre Recheneinrichtung 5 ist nun dazu ausgelegt, einen Bordstein 20 einerseits zu erkennen, andererseits aber auch zu klassifizieren. In Abhängigkeit des Klassifizierungsergebnisses kann sodann entschieden werden, ob - insbesondere unter Berücksichtigung der ebenfalls ermittelten Höhe des Bordsteins sowie einer Information zur Höhe des Reifenquerschnitts - eine Warnung auszugeben oder ein Fahreingriff vorgenommen werden muss. Zur Ausgabe einer akustischen Warnung ist exemplarisch ein Audiosystem 7 dargestellt, zur Ausgabe einer optischen Warnung ist ein Display 8, wie es üblicherweise im Fahrzeug verbaut ist, dargestellt.

Ein Längs- oder Querführungseingriff kann beispielsweise über ein der Bremseinrichtung zugeordnetes Steuergerät 9 erfolgen, das über das Steuergerät 3 angesteuert werden kann, und das separat die einzelnen, den Rädern zugeordnete Bremsen betätigt. Ferner kann über die Steuerungseinrichtung 3 ein Aktuator 10 oder ein entsprechendes, diesen bedienendes Steuergerät angesteuert werden, welcher Aktuator 10 Teil der Lenkeinrichtung ist, so dass im gezeigten Beispiel die Vorderräder für einen Längs- oder Querführungseingriff entsprechend verstellt werden können.

Wie beschrieben ist die Steuerungseinrichtung 3 in der Lage, einen etwaigen, in einem Kamerabild aufgenommenen Bordstein hinsichtlich des Typs zu klassifizieren und gestützt auf diese Information gegebenenfalls die entsprechenden Warnungen oder Fahreingriffe durchzuführen.

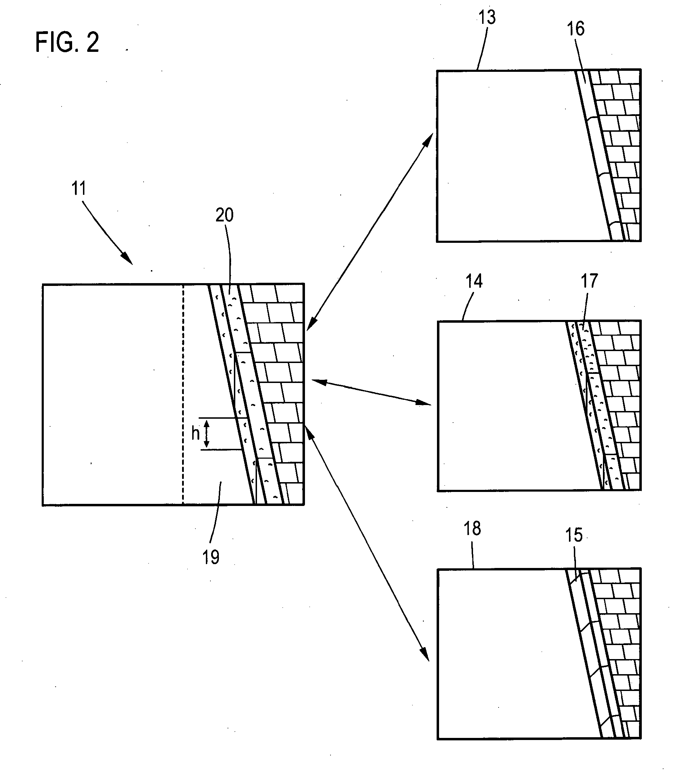

Fig. 2 zeigt exemplarisch in einer Prinzipdarstellung ein aufgenommenes Kamerabild 11. Dieses über die Kamera 6 aufgenommene Bild 11 zeigt den Bordstein 20 in der rechten Bildhälfte. Die Steuerungseinrichtung 3 respektive die Recheneinrichtung 5 ist nun zunächst in der Lage, durch einen entsprechenden Analyse- bzw. Auswertealgorithmus, beispielsweise einen kantenbasierten oder einen texturbasierten Algorithmus, zu erkennen, dass im Kamerabild 11 überhaupt ein Bordstein 20 gezeigt ist. Sodann ist die Steuerungseinrichtung 3 respektive die Recheneinrichtung 5 in der Lage, aus dem Kamerabild 11 die konkrete Höhe h des gezeigten Bordsteins 20 zu ermitteln.

Wesentlich für die Klassifizierung respektive die Typenermittlung ist ein nun folgender Bildvergleich des aufgenommenen Kamerabildes mit mehreren, in Fig. 2 gezeigten Vergleichsbildern 13, 14, 15. Diese Vergleichsbilder 13, 14, 15 sind im Speicher 4, auf den die Recheneinrichtung 5 Zugriff hat, hinterlegt. Die Vergleichsbilder 13, 14, 15 zeigen ersichtlich unterschiedliche Bordsteintypen, die sich sowohl hinsichtlich der Geometrie als auch gegebenenfalls hinsichtlich der Texturierung, also der Oberflächenbeschaffenheit, unterscheiden. So zeigt exemplarisch das Vergleichsbild 13 einen Bordstein 16, der als oberflächlich gewölbter Flachbordstein ausgeführt ist. Das Vergleichsbild 14 zeigt einen Bordstein 17, der als querschnittlich gesehen rechteckiger Granitbordstein ausgeführt ist. Schließlich zeigt das Vergleichsbild 15 einen Bordstein 18, der als Rundbordstein 16 mit einer schräg verlaufenden Oberseite ausgeführt ist. Die Bordsteine 16 und 18 sind beispielsweise als gegossene Betonbordsteine ausgeführt, sie weisen also eine entsprechende glatte Oberfläche auf. Demgegenüber weist der Granitbordstein 17, da gebrochen, eine texturierte Oberfläche, also eine unregelmäßige Oberfläche auf. Diese Vergleichsbilder 13, 14, 15 werden nun mit dem Kamerabild 11 verglichen, es erfolgt also ein "template matching", wobei die Vergleichsbilder 13, 14, 15 die entsprechenden Templates bilden. Sie sind vorab als standardisierte Vergleichsbilder aus einer Perspektive, die der der Kamera 6 entspricht, aufgenommen und remanent im Speicher 4 abgelegt worden.

Hat nun die Steuerungseinrichtung 3 respektive die Recheneinrichtung 5 im Kamerabild einen Bordstein 20 erkannt, so wählt sie nun einen entsprechenden Bildausschnitt 19, der im Wesentlichen den Bordstein 20 zeigt, aus dem Kamerabild 11 aus, in Fig. 2 ist dieser Bildbereich 19 über die gestrichelte Linie abgetrennt dargestellt. Die Recheneinrichtung 5 vergleicht nun diesen Bildbereich 19 mit jedem Vergleichsbild 13, 14, 15, wobei es selbstverständlich weit mehr als diese drei Vergleichsbilder im Speicher 4 hinterlegt sein können, je nachdem, wie viele Bordsteintypen vorab als Standardvergleichsbilder aufgenommen und dem Vergleich zu unterziehen sind.

Die Recheneinrichtung 5 nimmt nun unter Verwendung entsprechender kanten- oder texturbasierter Analysealgorithmen den entsprechenden Vergleich vor, um anhand der Vergleichsbilder den Bordsteintyp zu ermitteln, um den es sich bei dem Bordstein 20 handelt. Im gezeigten Ausführungsbeispiel ist ersichtlich, dass der Bordstein 20 dem im Vergleichsbild 14 gezeigten Bordstein 17 entspricht. Es handelt sich also bei dem Bordstein 20 um einen im Querschnitt gesehenen rechteckigen Granitbordstein mit üblicherweise relativ scharfer Kante. Zu jedem Vergleichsbild 13, 14, 15 sind im Speicher 4 selbstverständlich entsprechende Typeninformationen hinterlegt. Hat nun die Recheneinrichtung 5 den Bordstein 20 hinsichtlich des Typs erkannt respektive klassifiziert, so werden die entsprechenden, zum zugehörigen Vergleichsbild - hier dem Vergleichsbild 14 - hinterlegten Bordsteininformationen der weiteren Kritikalitätsbetrachtung zugrunde gelegt. In diese Kritikalitätsbetrachtung geht nun die bestimmte Höhe h des Bordsteins 20 sowie die im Speicher 4 ebenfalls hinterlegte Information über die Querschnittshöhe des Reifens, der dem Bordstein 20 benachbart ist, ein. Über diese Reifenquerschnittshöhe ist bekannt, ob es sich um einen normalen Reifen oder um einen Niederquerschnittsreifen handelt. Abhängig davon kann ein Bordstein kritisch oder unkritisch sein. Ein Granitbordstein, der beispielsweise lediglich 4 cm hoch ist, kann für einen normalen Reifen mit hinreichend großem Reifenquerschnitt nicht kritisch sein, während er für einen Niederquerschnittsreifen ein Gefahrenpotential darstellt.

Die Recheneinrichtung 5 beurteilt nun anhand des ermittelten, klassifizierten Bordsteintyps respektive der typenspezifischen Informationen, der ermittelten Ist-Höhe h des aufgenommenen Bordsteins 20 sowie der Reifenquerschnittshöhe einen Kritikalitätswert, basierend auf welchem sodann entschieden wird, ob Handlungsbedarf besteht oder nicht. Ergibt die Kritikalitätsbeurteilung, dass der Bordstein unkritisch ist, mithin also beispielsweise im Rahmen eines anstehenden Einparkvorgangs auch ohne weiteres überfahren werden kann, so wird weder eine Warnung ausgegeben noch erfolgt ein Fahrereingriff. Ergibt sich jedoch, dass der Bordstein kritisch ist, so wird die Warnung ausgegeben und/oder der Fahreingriff vorgenommen. Diese Prüfung kann laufend während des Einparkvorgangs neu vorgenommen werden, um auch Änderungen der Situation zu erfassen, z. B. eine Bordsteinerniedrigung, wenn sich das Fahrzeug weiterbewegt, oder eine Änderung des Radlenkwinkels, so dass das Rad in einem sehr flachen Winkel anlaufen würde etc.

Wie bereits beschrieben ist bevorzugt wenigstens eine weitere Kamera in das Fahrerassistenzsystem 2 eingebunden, die den Rückraum aufnimmt. Dies ermöglicht es insbesondere, im Rahmen eines Einparkvorgangs unterstützend tätig zu werden. Zu Beginn des Einparkvorgangs würde in diesem Fall über die Rückfahrkamera die entsprechende Aufnahme des Kamerabilds und umgehend die entsprechende Klassifizierung eines etwaigen Bordsteins vorgenommen werden, so dass bereits während des Rückwärtseinparkvorgangs die entsprechende Kritikalitätsbeurteilung zugrunde gelegt und eine etwaige Warnung erfolgen respektive ein Eingriff erfolgen kann. Kommt es zu einem Rangiervorgang, so kann über das das Fahrzeugvorfeld aufzeigende Kamerabild auch bei dieser Fahrtrichtung eine entsprechende fahrerassistenzsystemseitige Unterstützung erfolgen.

## Patentansprüche

1. Kraftfahrzeug, umfassend ein Fahrerassistenzsystem zur Ermittlung von im Fahrzeugumfeld befindlichen Bordsteinen und zur Ausgabe einer Warnung oder zur Durchführung eines Längs- oder Querführungseingriffs, wobei das Fahrerassistenzsystem wenigstens eine Kamera zur Aufnahme von Bildern des Fahrzeugumfelds und eine Steuerungseinrichtung zur Auswertung der Bilder zur Ermittlung eines etwaigen im Bild gezeigten Bordsteins aufweist,
wobei der Steuerungseinrichtung (3) ein Speicher (4) mit darin hinterlegten, unterschiedliche Bordsteintypen zeigenden Vergleichsbildern (13, 14, 15) zugeordnet ist, wobei die Steuerungseinrichtung (3) zum Klassifizieren eines in einem Bild (11) ermittelten Bordsteins (20) durch Vergleich des Bildes (11) mit einem Vergleichsbild (13, 14, 15) und zur Ausgabe der Warnung oder zur Durchführung des Eingriffs in Abhängigkeit des Klassifikationsergebnisses ausgebildet ist.

2. Kraftfahrzeug nach Anspruch 1,
**dadurch gekennzeichnet,**
**dass** die Steuerungseinrichtung (3) zur Auswahl eines den Bordstein (20) zeigenden Bildbereichs (19) innerhalb des Bildes (11) und zum Vergleich des Bildbereichs (19) mit dem Vergleichsbild (13, 14, 15) ausgebildet ist.

3. Kraftfahrzeug nach Anspruch 1 oder 2,
**dadurch gekennzeichnet,**
**dass** seitens der Steuerungseinrichtung (3) im Rahmen des Vergleichs im Bild (11) oder im Bildbereich (19) und im Vergleichsbild (13, 14, 15) der jeweilige Bordstein (20, 16, 17, 18) anhand einer kantenbasierten Bildauswertung und/oder einer texturbasierten Auswertung ermittelt und das jeweilige Auswertungsergebnis verglichen wird.

4. Kraftfahrzeug nach einem der vorangehenden Ansprüche,
**dadurch gekennzeichnet,**
**dass** zusätzlich seitens der Steuerungseinrichtung (3) im Bild (11) selbst oder im Rahmen des Vergleichs die Höhe (h) des im Bild (11) gezeigten Bordsteins (20) ermittelbar ist, wobei zur Ausgabe der Warnung oder der Durchführung des Eingriffs zusätzlich die ermittelte Höhe (h) berücksichtigbar ist.

5. Kraftfahrzeug nach einem der vorangehenden Ansprüche,
**dadurch gekennzeichnet, dass**
dass zur Ausgabe der Warnung oder der Durchführung des Eingriffs zusätzlich die Querschnittshöhe der Reifen des Kraftfahrzeugs (1) berücksichtigbar ist.

6. Verfahren zur Ermittlung von im Fahrzeugumfeld befindlichen Bordsteinen und zur Ausgabe einer Warnung oder zur Durchführung eines Längs- oder Querführungseingriffs mittels eines Fahrerassistenzsystems, wobei das Fahrerassistenzsystem wenigstens eine Kamera zur Aufnahme von Bildern des Fahrzeugumfelds und eine Steuerungseinrichtung zur Auswertung der Bilder zur Ermittlung eines etwaigen im Bild gezeigten Bordsteins aufweist,
wobei die Steuerungseinrichtung (3) einen in einem Bild (11) ermittelten Bordstein (20) durch Vergleich des Bildes (11) mit Vergleichsbildern (13, 14, 15), die unterschiedliche Bordsteintypen (16, 17, 18) zeigen, klassifiziert und in Abhängigkeit des Klassifikationsergebnisses die Warnung ausgibt oder den Eingriff durchführt, wobei die Vergleichsbilder (13, 14, 15) in einem der Steuerungseinrichtung (3) zugeordneten Speicher (4) hinterlegt sind.

7. Verfahren nach Anspruch 6,
**dadurch gekennzeichnet,**
**dass** die Steuerungseinrichtung (3) einen den Bordstein (20) zeigenden Bildbereich (19) innerhalb des Bildes (11) auswählt und den Bildbereich (19) mit dem Vergleichsbild (13, 14, 15) vergleicht.

8. Verfahren nach Anspruch 6 oder7,
**dadurch gekennzeichnet,**
**dass** seitens der Steuerungseinrichtung (3) im Rahmen des Vergleichs im Bild (11) und im Vergleichsbild (13, 14, 15) der jeweilige Bordstein (16, 17, 18, 20) anhand einer kantenbasierten Bildauswertung und/oder einer texturbasierten Auswertung ermittelt und das jeweilige Auswertungsergebnis verglichen wird.

9. Verfahren nach einem der Ansprüche 6 bis 8,
**dadurch gekennzeichnet,**
**dass** zusätzlich seitens der Steuerungseinrichtung (3) im Bild (11) selbst oder im Rahmen des Vergleichs die Höhe (h) des im Bild (11) gezeigten Bordsteins (20) ermittelt wird, wobei zur Ausgabe der Warnung oder der Durchführung des Eingriffs zusätzlich die ermittelte Höhe (h) berücksichtigt wird.

10. Verfahren nach einem der Ansprüche 6 bis 9,
**dadurch gekennzeichnet, dass**
dass zur Ausgabe der Warnung oder der Durchführung des Eingriffs zusätzlich die Querschnittshöhe der Reifen des Kraftfahrzeugs (1) seitens der Steuerungseinrichtung (3) berücksichtigt wird.

## Claims

1. Motor vehicle, comprising a driver assistance system for identifying curbs located within the vehicle's environment and for issuing a warning or for performing a longitudinal or lateral guidance operation, wherein the driver assistance system has at least a camera for capturing images of the vehicle's environment and a control apparatus for evaluating the images to identify any possible curbs appearing in the image,
wherein
the control apparatus (3) is assigned a memory (4) with comparison images (13, 14, 15) showing different types of curbs stored therein, wherein the control apparatus (3) is designed to classify a curb (20) identified in an image (11) by comparing the image (11) with a comparison image (13, 14, 15) and to issue the warning or to perform the operation depending on the classification result.

2. Motor vehicle according to claim 1,
**characterised in**
**that**, the control apparatus (3) is designed to select an image region (19) within the image (11) showing the curb (20) and to compare the image region (19) with the comparison image (13, 14, 15).

3. Motor vehicle according to claim 1 or 2,
**characterised in**
**that**, the particular curb (20, 16, 17, 18) is identified during the course of comparison within the image (11) or within the image region (19) and within the comparison image (13, 14, 15) with the aid of edge-based image evaluation and/or texture-based evaluation and the particular evaluation result is compared by the control apparatus (3).

4. Motor vehicle according to any of the preceding claims,
**characterised in**
**that**, in addition, within the image (11) itself or during the course of comparison, the height (h) of the curb (20) appearing in the image (11) can be identified by the control apparatus (3), wherein the identified height (h) can additionally be taken into account for issuing the warning or performing the operation.

5. Motor vehicle according to any of the preceding claims,
**characterised in that**,
the section height of the tyres of the motor vehicle (1) can additionally be taken into account for issuing the warning or performing the operation.

6. Method for identifying curbs located within the vehicle's environment and for issuing a warning or for performing a longitudinal or lateral guidance operation by means of a driver assistance system, wherein the driver assistance system has at least a camera for capturing images of the vehicle's environment and a control apparatus for evaluating the images to identify any possible curbs appearing in the image,
wherein
the control apparatus (3) classifies a curb (20) identified in an image (11) by comparing the image (11) with comparison images (13, 14, 15), which show different types of curbs (16, 17, 18), and issues the warning or performs the operation depending on the classification result, wherein the comparison images (13, 14, 15) are stored in a memory (4) assigned to the control apparatus (3).

7. Method according to claim 6,
**characterised in**
**that**, the control apparatus (3) selects an image region (19) within the image (11) showing the curb (20) and compares the image region (19) with the comparison image (13, 14, 15).

8. Method according to claim 6 or 7,
**characterised in**
**that**, the particular curb (16, 17, 18, 20) is identified during the course of comparison within the image (11) and within the comparison image (13, 14, 15) with the aid of edge-based image evaluation and/or texture-based evaluation and the particular evaluation result is compared by the control apparatus (3).

9. Method according to any of claims 6 to 8,
**characterised in**
**that**, in addition, within the image (11) itself or during the course of comparison, the height (h) of the curb (20) appearing in the image (11) is identified by the control apparatus (3), wherein the identified height (h) is additionally taken into account for issuing the warning or performing the operation.

10. Method according to any of claims 6 to 9,
**characterised in that**,
the section height of the tyres of the motor vehicle (1) is additionally taken into account by the control apparatus (3) for issuing the warning or performing the operation.

## Revendications

1. Véhicule automobile, comprenant un système d'assistance au conducteur permettant de détecter des bordures de trottoir se trouvant aux alentours du véhicule et permettant d'émettre un avertissement ou permettant de mettre en œuvre une action de guidage longitudinal ou latéral, dans lequel le système d'assistance au conducteur présente au moins une caméra permettant d'enregistrer des images des alentours du véhicule et un appareil de commande permettant d'évaluer les images afin de détecter une éventuelle bordure de trottoir représentée sur l'image,
dans lequel l'appareil de commande (3) est associé à une mémoire (4) au sein de laquelle sont stockées différentes images de comparaison (13, 14, 15) représentant différents types de bordure de trottoir, dans lequel l'appareil de commande (3) est conçu pour, grâce à une comparaison entre l'image (11) et une image de comparaison (13, 14, 15), classer une bordure de trottoir (20) détectée sur une image (11) et pour émettre l'avertissement ou pour mettre en œuvre l'action en fonction du résultat de classification.

2. Véhicule automobile selon la revendication 1,
**caractérisé en ce que**
l'appareil de commande (3) est conçu pour sélectionner au sein de l'image (11) une région d'image (19) représentant la bordure de trottoir (20) et pour comparer la région d'image (19) avec l'image de comparaison (13, 14, 15).

3. Véhicule automobile selon la revendication 1 ou 2,
**caractérisé en ce que**
la bordure de trottoir (20, 16, 17, 18) respective est détectée par l'appareil de commande (3) dans le cadre de la comparaison au sein de l'image (11) ou au sein de la région d'image (19) et au sein de l'image de comparaison (13, 14, 15), à l'aide d'une évaluation d'image basée sur les arêtes et/ou d'une évaluation basée sur les textures et le résultat d'évaluation respectif est comparé.

4. Véhicule automobile selon l'une quelconque des revendications précédentes,
**caractérisé en ce que**
la hauteur (h) de la bordure de trottoir (20) représentée sur l'image (11) peut également être détectée par l'appareil de commande (3) au sein de l'image (11) elle-même ou dans le cadre de la comparaison, dans lequel la hauteur (h) détectée peut également être prise en compte pour l'émission de l'avertissement ou la mise en œuvre de l'action.

5. Véhicule automobile selon l'une quelconque des revendications précédentes,
**caractérisé en ce que**
la hauteur de section des pneumatiques du véhicule automobile (1) peut également être prise en compte pour l'émission de l'avertissement ou pour la mise en œuvre de l'action.

6. Procédé permettant de détecter des bordures de trottoir se trouvant aux alentours du véhicule et permettant d'émettre un avertissement ou permettant de mettre en œuvre une action de guidage longitudinal ou latéral au moyen d'un système d'assistance au conducteur, dans lequel le système d'assistance au conducteur présente au moins une caméra permettant d'enregistrer des images des alentours du véhicule et un appareil de commande permettant d'évaluer les images afin de détecter une éventuelle bordure de trottoir représentée sur l'image,
dans lequel l'appareil de commande (3), grâce à une comparaison entre l'image (11) et des images de comparaison (13, 14, 15) qui montrent différents types de bordures de trottoir (16, 17, 18), classe une bordure de trottoir (20) détectée sur une image (11) et émet l'avertissement ou met en œuvre l'action en fonction du résultat de classification, dans lequel les images de comparaison (13, 14, 15) sont stockées dans une mémoire (4) associée à l'appareil de commande (3).

7. Procédé selon la revendication 6,
**caractérisé en ce que**
l'appareil de commande (3) sélectionne au sein de l'image (11) une région d'image (19) représentant la bordure de trottoir (20) et compare la région d'image (19) avec l'image de comparaison (13, 14, 15).

8. Procédé selon la revendication 6 ou 7,
**caractérisé en ce que**
la bordure de trottoir (16, 17, 18, 20) respective est détectée par l'appareil de commande (3) dans le cadre de la comparaison au sein de l'image (11) et au sein de l'image de comparaison (13, 14, 15), à l'aide d'une évaluation d'image basée sur les arêtes et/ou d'une évaluation basée sur les textures et le résultat d'évaluation respectif est comparé.

9. Procédé selon l'une quelconque des revendications 6 à 8,
**caractérisé en ce que**
la hauteur (h) de la bordure de trottoir (20) représentée sur l'image (11) est également détectée par l'appareil de commande (3) au sein de l'image (11) elle-même ou dans le cadre de la comparaison, dans lequel la hauteur (h) détectée est également prise en compte pour l'émission de l'avertissement ou la mise en œuvre de l'action.

10. Procédé selon l'une quelconque des revendications 6 à 9,
**caractérisé en ce que**
la hauteur de section des pneumatiques du véhicule automobile (1) est également prise en compte par l'appareil de commande (3) pour l'émission de l'avertissement ou la mise en œuvre de l'action.
